# EUROPEAN PATENT APPLICATION

(11) **EP 4 836 390 A1**
(43) Date of publication of application: **04.11.2026**
(21) Application number: 23962851.4
(22) Date of filing: 29.12.2023
(51) Int. Cl.: H04M 1/19

(54) **AUDIO PROCESSING METHOD AND APPARATUS, AND STORAGE MEDIUM**

(71) Applicant: Beijing Xiaomi Mobile Software Co., Ltd., Beijing 100085 (CN)
(72) Inventor: WU, Ninghang, Beijing 100085 (CN)
(74) Representative: Dehns Germany Partnerschaft mbB
(86) International application number: PCT/CN2023/143453
(87) International publication number: WO 2025/138177

(57) **Abstract**

The present disclosure relates to an audio processing method and apparatus, and a storage medium. The audio processing method comprises: in response to a terminal being in a receiver mode, acquiring first audio signals and a second audio signal, the first audio signals being multi-channel audio signals collected on the basis of a stereo format, the first audio signals comprising audio signals from a plurality of sound sources, the plurality of sound sources comprising a target sound source, the second audio signal being a single-channel audio signal collected on the basis of a non-stereo format, and the second audio signal being an audio signal of the target sound source; and by using the second audio signal, adjusting a portion of audio signals corresponding to the target sound source among the first audio signals. According to the present disclosure, performing communication on the basis of spatial audio can be achieved.

## Description

### TECHNICAL FIELD

The present disclosure relates to the field of audio technologies, and in particular to a method and apparatus for processing an audio, and a storage medium.

### BACKGROUND

At present, the basic functions of terminals include monaural communication, which enables capture of a user's audio signal with a high signal-to-noise ratio in an earpiece mode. The captured audio signal contains almost only the target audio component, while environmental sounds and other audio components irrelevant to the target audio are eliminated as much as possible.

With the gradual rise of spatial audio services, the terminals are gradually supporting spatial audio capture. The objective of spatial audio capture technology is to reproduce the complete sound field of the environment in which the terminal device is located, while maintaining the relative positional relationships between all sound sources in the sound field unchanged.

### SUMMARY

The terminal performs audio communication based on a single channel in the earpiece mode, and cannot support communication based on spatial audio.

Embodiments of the present disclosure provide a method and apparatus for processing an audio, and a storage medium.

According to a first aspect of embodiments of the present disclosure, there is provided a method for processing an audio, which includes: obtaining a first audio signal and a second audio signal in response to a terminal being in an earpiece mode, wherein the first audio signal is a multi-channel audio signal captured based on a stereo format, the first audio signal includes audio signals of a plurality of sound sources, and the plurality of sound sources include a target sound source, the second audio signal is a single-channel audio signal captured based on a non-stereo format, and the second audio signal is an audio signal of the target sound source; and adjusting a partial audio signal corresponding to the target sound source in the first audio signal by using the second audio signal.

According to a second aspect of embodiments of the present disclosure, there is provided an apparatus for processing an audio, which includes: an obtaining module, configured to obtain a first audio signal and a second audio signal in response to a terminal being in an earpiece mode, wherein the first audio signal is a multi-channel audio signal captured based on a stereo format, the first audio signal includes audio signals of a plurality of sound sources, and the plurality of sound sources include a target sound source, the second audio signal is a single-channel audio signal captured based on a non-stereo format, and the second audio signal is an audio signal of the target sound source; and a processing module, configured to adjust a partial audio signal corresponding to the target sound source in the first audio signal by using the second audio signal.

According to a third aspect of embodiments of the present disclosure, there is provided an electronic device, including: a memory for storing instructions; and
a processor, configured to invoke the instructions stored in the memory to execute the first aspect and the method for processing the audio in any one of the first aspects.

According to a fourth aspect of embodiments of the present disclosure, there is provided a storage medium, including: the storage medium storing instructions, wherein when the instructions are executed by a processor, the first aspect and the method for processing the audio in any one of the first aspects are performed.

In the present disclosure, when the terminal is in the earpiece mode, the multi-channel audio signal captured based on the stereo format and the single-channel audio signal captured based on the non-stereo format are obtained, the multi-channel audio signal includes the plurality of sound sources including the target sound source, while the single-channel audio signal is the audio signal of the target sound source. The single-channel audio signal can be used to adjust the target sound source portion of the multi-channel audio signal to make it more reasonable and thus locate it at the desired position, achieving spatial audio-based communication.

### BRIEF DESCRIPTION OF THE DRAWINGS

In order to more clearly explain the technical solutions in the embodiments of the present disclosure, the following drawings are introduced as required for describing the embodiments. The following drawings are only some of the embodiments of the present disclosure and do not limit the scope of protection of the present disclosure.
FIG. 1 shows a schematic diagram of an architecture of a communication system according to an embodiment of the present disclosure.
FIG. 2 shows a schematic interactive diagram of a communication method according to an embodiment of the present disclosure.
FIG. 3a is a flowchart of a method for processing an audio provided according to an embodiment of the present disclosure.
FIG. 3b is a flowchart of a method for processing an audio provided according to an embodiment of the present disclosure.
FIG. 4 is a flowchart of a method for processing an audio provided according to an embodiment of the present disclosure.
FIG. 5 shows a schematic interactive diagram of a communication method according to an embodiment of the present disclosure.
FIG. 6a shows a schematic structural diagram of a terminal according to an embodiment of the present disclosure.
FIG. 6b shows a schematic structural diagram of a terminal according to an embodiment of the present disclosure.
FIG. 7a shows a schematic structural diagram of a communication device according to an example embodiment.
FIG. 7b shows a schematic structural diagram of a chip according to an example embodiment.
FIG. 8 shows a block diagram of an apparatus for processing an audio according to an example embodiment.

### DETAILED DESCRIPTION

Embodiments of the present disclosure provide a method and apparatus for processing an audio, and a storage medium.

In a first aspect, embodiments of the present disclosure provide a method for processing an audio, which includes: obtaining a first audio signal and a second audio signal in response to a terminal being in an earpiece mode, wherein the first audio signal is a multi-channel audio signal captured based on a stereo format, the first audio signal includes audio signals of a plurality of sound sources, and the plurality of sound sources include a target sound source, the second audio signal is a single-channel audio signal captured based on a non-stereo format, and the second audio signal is an audio signal of the target sound source; and adjusting a partial audio signal corresponding to the target sound source in the first audio signal by using the second audio signal.

In the above embodiments, when the terminal is in the earpiece mode, the multi-channel audio signal captured based on the stereo format and the single-channel audio signal captured based on the non-stereo format are obtained, the multi-channel audio signal includes the plurality of sound sources including the target sound source, while the single-channel audio signal is the audio signal of the target sound source. The single-channel audio signal can be used to adjust the target sound source portion of the multi-channel audio signal to make it more reasonable and thus locate it at the desired position, achieving spatial audio-based communication.

In some embodiments of the first aspect, a frequency difference between the partial audio signal corresponding to the target sound source in the first audio signal and the second audio signal is less than or equal to a threshold.

In the above embodiments, the frequency difference between the partial audio signal corresponding to the target sound source in the first audio signal and the second audio signal is less than or equal to the threshold. That is, when there is the partial audio signal in the first audio signal whose frequency difference with the second audio signal is less than or equal to the threshold, it can be identified as the partial audio signal corresponding to the target sound source, so as to efficiently determine the partial audio signal corresponding to the target sound source in the first audio signal.

In some embodiments of the first aspect, the target sound source is located in a first direction of the terminal, and adjusting the partial audio signal corresponding to the target sound source in the first audio signal by using the second audio signal includes at least one of: attenuating, by using the second audio signal, the partial audio signal corresponding to the target sound source in the first audio signal of a channel corresponding to the first direction; or amplifying, by using the second audio signal, the partial audio signal corresponding to the target sound source in the first audio signal of a channel corresponding to another direction other than the first direction.

In the above embodiments, when the target sound source is located in a certain direction of the terminal, the target sound source portion contained in the audio signal of the channel corresponding to that direction can be attenuated. Alternatively, the target sound source portion contained in the audio signal of another channel other than the channel corresponding to that direction can be amplified, so that the amplitude of the target sound source at the side where the target sound source is located is as close as possible to the amplitude of the target sound source at the side where the target sound source is not located. In other words, the target sound source can be positioned in the center of space, improving the user experience during communication.

In some embodiments of the first aspect, attenuating the partial audio signal corresponding to the target sound source in the first audio signal of the channel corresponding to the first direction includes at least one of: subtracting the second audio signal that is in phase with the partial audio signal from the partial audio signal and obtaining the attenuated partial audio signal; or adding the second audio signal that is out of phase with the partial audio signal to the partial audio signal and obtaining the attenuated partial audio signal.

In the above embodiments, attenuating the partial audio signal corresponding to the target sound source can be performing subtraction with the second audio signal that is in phase with the partial audio signal, or performing addition with the second audio signal that is out of phase with the partial audio signal, thereby efficiently obtaining the attenuated target sound source.

In some embodiments of the first aspect, amplifying the partial audio signal corresponding to the target sound source in the first audio signal of the channel corresponding to another direction other than the first direction includes at least one of: adding the second audio signal that is in phase with the partial audio signal to the partial audio signal and obtaining the amplified partial audio signal; or subtracting the second audio signal that is out of phase with the partial audio signal from the partial audio signal and obtaining the amplified partial audio signal.

In the above embodiments, amplifying the partial audio signal corresponding to the target sound source can be performing addition with the second audio signal that is in phase with the partial audio signal, or performing subtraction with the second audio signal that is out of phase with the partial audio signal, thereby efficiently obtaining the amplified target sound source.

In a second aspect, there is provided an apparatus for processing an audio, including: an obtaining module, configured to obtain a first audio signal and a second audio signal in response to a terminal being in an earpiece mode, wherein the first audio signal is a multi-channel audio signal captured based on a stereo format, the first audio signal includes audio signals of a plurality of sound sources, and the plurality of sound sources include a target sound source, the second audio signal is a single-channel audio signal captured based on a non-stereo format, and the second audio signal is an audio signal of the target sound source; and a processing module, configured to adjust a partial audio signal corresponding to the target sound source in the first audio signal by using the second audio signal.

In some embodiments of the second aspect, a frequency difference between the partial audio signal corresponding to the target sound source in the first audio signal and the second audio signal is less than or equal to a threshold.

In some embodiments of the second aspect, the target sound source is located in a first direction of the terminal, and the processing module adjusts, by using the second audio signal, the partial audio signal corresponding to the target sound source in the first audio signal in at least one of the following manners: attenuating, by using the second audio signal, the partial audio signal corresponding to the target sound source in the first audio signal of a channel corresponding to the first direction; or amplifying, by using the second audio signal, the partial audio signal corresponding to the target sound source in the first audio signal of a channel corresponding to another direction other than the first direction.

In some embodiments of the second aspect, the processing module attenuates the partial audio signal corresponding to the target sound source in the first audio signal of the channel corresponding to the first direction in at least one of the following manners: subtracting the second audio signal that is in phase with the partial audio signal from the partial audio signal and obtaining the attenuated partial audio signal; or adding the second audio signal that is out of phase with the partial audio signal to the partial audio signal and obtaining the attenuated partial audio signal.

In some embodiments of the second aspect, the processing module amplifies the partial audio signal corresponding to the target sound source in the first audio signal of the channel corresponding to another direction other than the first direction in at least one of the following manners: adding the second audio signal that is in phase with the partial audio signal to the partial audio signal and obtaining the amplified partial audio signal; or subtracting the second audio signal that is out of phase with the partial audio signal from the partial audio signal and obtaining the amplified partial audio signal.

In a third aspect, there is provided an electronic device, including: a memory for storing instructions; and a processor, configured to invoke the instructions stored in the memory to execute the first aspect and the method for processing the audio in any one of the first aspects.

In a fourth aspect, there is provided a storage medium, including: the storage medium storing instructions, wherein when the instructions are executed by a processor, the first aspect and the method for processing the audio in any one of the first aspects are performed.

In a fifth aspect, embodiments of the present disclosure provide a program product that, when executed by a communication device, causes the communication device to perform the method as described in an implementation of the first or second aspect.

In a sixth aspect, embodiments of the present disclosure provide a computer program that, when run on a computer, causes the computer to perform the method as described in an implementation of the first or second aspect.

In a seventh aspect, embodiments of the present disclosure provide a chip or chip system. The chip or chip system includes a processing circuitry configured to perform the method as described in an implementation of the first or second aspect.

It can be understood that the terminals, communication systems, storage media, program products, computer programs, chips, or chip systems involved in various embodiments of the present disclosure are all used to execute the methods proposed in the embodiments of the present disclosure. Therefore, the beneficial effects they may achieve may be referred to in the corresponding methods, and will not be elaborated upon here.

The embodiments of the present disclosure are not exhaustive, but merely illustrate a part of the embodiments and do not constitute specific limitations on the scope of protection of the present disclosure. In the absence of contradiction, each step in a certain embodiment may be implemented as an independent embodiment, and the steps may be arbitrarily combined. For example, a solution with a part of steps removed from a certain embodiment may also be implemented as an independent embodiment, and the order of the steps in a certain embodiment may be arbitrarily exchanged. In addition, the implementations in a certain embodiment may be arbitrarily combined. Additionally, the various embodiments may be arbitrarily combined. For example, a part of or all of the steps of different embodiments may be arbitrarily combined, and a certain embodiment may be arbitrarily combined with the implementations of other embodiments.

In various embodiments of the present disclosure, unless otherwise specified or logically conflicting, the terms and/or descriptions among the embodiments are consistent and may be mutually referenced. Technical environments in different embodiments may be combined based on their inherent logical relationships to form new embodiments.

The terms used in the embodiments of the present disclosure are for the purpose of describing specific embodiments only, and are not intended to limit the present disclosure.

In the embodiments of the present disclosure, unless otherwise specified, elements expressed in singular forms, such as "a", "an", "the", "above", "said", "aforementioned", "this", etc. may refer to "one and only one", or may refer to "one or more" or "at least one" and the like. For example, when articles such as "a", "an", "the" in English are used in translation, the nouns following these articles may be understood as singular expression forms or plural expression forms.

In the embodiments of the present disclosure, "a plurality of" refers to two or more.

In some embodiments, terms such as "at least one of", "one or more", "a plurality of", and "multiple" may be interchangeable.

In some embodiments, the reciting manners such as "at least one of A and B", "A and/or B", "in one situation A, in another situation B", "in response to one situation A, in response to another situation B" may include the following technical solutions depending on the situation: in some embodiments, A (executing A independently of B); in some embodiments, B (executing B independently of A); in some embodiments, selectively executing A or B (executing A and B selectively); and in some embodiments, A and B (executing both A and B). When there are more branches such as A, B, C, etc., the solution is similar to the above.

In some embodiments, the reciting manners such as "A or B" may include the following technical solutions depending on the situation: in some embodiments, A (executing A independently of B); in some embodiments, B (executing B independently of A); in some embodiments, selectively executing A or B (executing A and B are selectively). When there are more branches such as A, B, C, etc., the solution is similar to the above.

The prefix words such as "first" and "second" in the embodiments of the present disclosure are only used to distinguish different described objects, and do not limit the position, order, priority, number, or content, etc. of the described objects. The description of the described objects may refer to the description in the claims or the context of the embodiments, and should not constitute unnecessary limitations due to the use of the prefix words. For example, if the described object is a "field", then the ordinal number before the "field" in the "first field" and the "second field" does not limit the position or order between the "fields", and "first" and "second" do not limit whether the "fields" they modify are in the same message, nor do they limit the sequential order of the "first field" and the "second field". For another example, if the described object is a "level", then the ordinal number before the "level" in the "first level" and the "second level" does not limit the priority between the "levels". For another example, the number of the described objects is not limited by the ordinal number, and may be one or more. Taking the "first device" as an example, the number of "devices" may be one or more. Furthermore, the objects modified by different prefix words may be the same or different. For example, if the described object is a "device", then the "first device" and the "second device" may be the same device or different devices, and may be of the same type or different types. For another example, if the described object is "information", then the "first information" and the "performance of various AI Models" may be the same information or different information, and may be information of the same content or information of different contents.

In some embodiments, "comprising A", "including A", "used for indicating A", and "carrying A" may be interpreted as directly carrying A, or may be interpreted as indirectly indicating A.

In some embodiments, terms such as "in response to...", "in response to determining...", "in the case of...", "when...", "at the time of...", "if...", "assuming...", etc. may be interchangeable.

In some embodiments, terms such as "greater than", "greater than or equal to", "not less than", "more than", "more than or equal to", "not smaller than", "higher than", "higher than or equal to", "not lower than", "above", etc. may be interchangeable. Terms such as "less than", "less than or equal to", "not greater than", "smaller than" "smaller than or equal to", "not more than", "lower than", "lower than or equal to", "not higher than", "below", etc. may be interchangeable.

In some embodiments, apparatuses and devices may be interpreted as physical or virtual, and their names are not limited to the names recited in the embodiments, which can also be understood as "equipment", "device", "circuit", "network element", "node", "function", "unit", "section", "system", "network", "chip", "chip system", "entity", "subject", etc. in some cases.

In some embodiments, "network" may be interpreted as a device (e.g., an access network device, a core network device, etc.) included in the network.

In some embodiments, "access network device (AN device)" may also be called "radio access network device (RAN device)", "base station (BS)", "radio base station", "fixed station", and in some embodiments, it may also be understood as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)", etc.

In some embodiments, "terminal" or "terminal device" may be called "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", etc.

In some embodiments, obtaining data, information, etc. may comply with the laws and regulations of the country where it is located.

In some embodiments, data, information, etc. may be obtained after the user consent is obtained.

In addition, each element, each row, or each column in the table of the embodiments of the present disclosure may be implemented as an independent embodiment, and the combination of any element, any row, or any column may also be implemented as an independent embodiment.

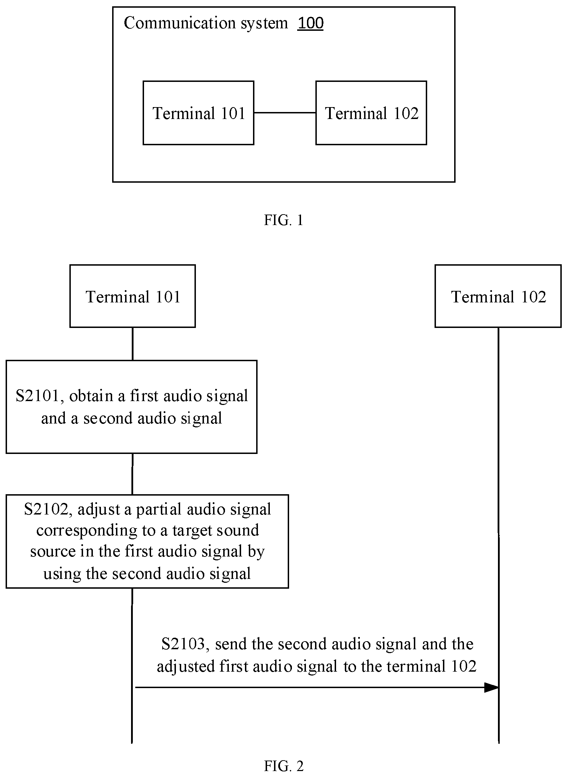

FIG. 1 shows a schematic diagram of an architecture of a communication system according to an embodiment of the present disclosure.

As shown in FIG. 1, the communication system 100 includes a terminal 101 and a terminal 102.

In some embodiments, for example, the terminal 101 or the terminal 102 includes, but is not limited to, at least one of: a mobile phone, a wearable device, an IoT device, a vehicle with communication functions, a smart vehicle, a pad, a computer with wireless transceiving functions, a virtual reality (VR) terminal device, an augmented reality (AR) terminal device, a wireless terminal device in industrial control, a wireless terminal device in self-driving applications, a wireless terminal device in remote medical surgery, a wireless terminal device in the smart grid, a wireless terminal device in transportation safety, a wireless terminal device in the smart city, or a wireless terminal device in smart homes.

In some embodiments, the technical solution in the present disclosure may be applicable to an Open RAN architecture. In this case, the interfaces between or within the access network devices involved in the embodiments of the present disclosure may become internal interfaces of the Open RAN. The procedures and information exchange between these internal interfaces may be implemented through software or programs.

It should be understood that the communication system described in the embodiments of the present disclosure is for a clearer explanation of the technical solution of the embodiments of the present disclosure, but does not constitute a limitation on the technical solution proposed in the embodiments of the present disclosure. Those ordinary skilled in the art know that with the evolution of the system architecture and the emergence of new service scenarios, the technical solution proposed in the embodiments of the present disclosure is also applicable to similar technical problems.

The embodiments of the present disclosure described below may be applied to the communication system 100 shown in FIG. 1, or a part of the subjects in the communication system 100, but are not limited thereto. The subjects shown in FIG. 1 are illustrative only. The communication system may include all of or a part of the subjects shown in FIG. 1, or may include subjects other than those shown in FIG. 1. The number and form of each subject are arbitrary, and each subject may be physical or virtual. The connection relationships between the subjects are illustrative. The subjects may not be connected to each other or may be connected to each other. The connection may be in any way, either direct or indirect, wired or wireless.

The embodiments of the present disclosure may be applied to the long term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), public land mobile network (PLMN) network, device-to-device (D2D) system, machine-to-machine (M2M) system, Internet of Things (IoT) system, vehicle-to-everything (V2X) system, system utilizing other methods for processing the audio, and next generation system extended based on these, etc. Furthermore, a plurality of systems may be combined (for example, a combination of the LTE or the LTE-A with 5G) for application.

At present, to satisfy both traditional monaural communication requirements and emerging spatial audio requirements, terminals are generally provided with multiple microphones (mics), for example, at least two mics. Spatial audio may be understood as capturing sounds in various directions through multiple channels, such that a user is able to perceive sounds from various directions and obtain an audio experience consistent with a real scene. The objective of spatial audio capture technology is to reproduce the complete sound field of the environment in which the terminal is located, while maintaining the relative positional relationships between all sound sources in the sound field unchanged.

With the gradual rise of spatial audio services, terminals are gradually beginning to support spatial audio capture. Existing technologies support capturing spatial audio during video recording, or support capturing spatial audio and performing communication in a speakerphone mode. However, in an earpiece mode, communication based on spatial audio cannot be achieved, or the captured spatial audio effect is relatively poor. For example, assuming that a terminal has left and right channels, when a user is located on the left side of the terminal, the user voice captured by the left channel is louder than the user voice captured by the right channel, thereby causing displacement of the positioning of the user voice in the overall sound field, resulting in a relatively poor communication experience for the user. That is, existing spatial audio capture technologies cannot change the relative relationships between sound sources in the sound field, if the speaking position of the user is taken as the front direction, the left and right sides of the sound field captured by the terminal correspond to the front and rear directions of the user, which differs from the audio service experienced by the user at the capturing end, thereby causing a relatively poor audio experience for a receiving-end user utilizing the audio signal transmitted by a sending-end user.

Therefore, the present disclosure provides a method for processing an audio. When the terminal is in the earpiece mode, the multi-channel audio signal captured based on the stereo format and the single-channel audio signal captured based on the non-stereo format are obtained, the multi-channel audio signal includes the plurality of sound sources including the target sound source, while the single-channel audio signal is the audio signal of the target sound source. The single-channel audio signal can be used to adjust the target sound source portion of the multi-channel audio signal to make it more reasonable and thus locate it at the desired position, achieving spatial audio-based communication.

FIG. 2 shows a schematic interactive diagram of a communication method according to an embodiment of the present disclosure. As shown in FIG. 2, the embodiment of the present disclosure relates to the communication method, which is used for the communication system 100, and the method includes steps S2101 to S2103.

In the step S2101, the terminal 101 obtains a first audio signal and a second audio signal.

In some embodiments, in response to the terminal being in an earpiece mode, the first audio signal and the second audio signal are obtained. The earpiece mode

In some embodiments, the first audio signal is a multi-channel audio signal captured based on a stereo format. That is, the terminal can capture the multi-channel audio signal in the stereo format to obtain the first audio signal. The first audio signal can be understood as a spatial audio signal. The first audio signal includes a plurality of sound sources, and the plurality of sound sources include a target sound source. Taking the target sound source being the user's voice as an example, the first audio signal can be the overall ambient sound including the user's voice.

In some embodiments, the stereo format includes, for example, 5.1.4 format, 7.1.4 format, stereo format, ambisonic format, etc. The present disclosure does not list all examples, but is not limited thereto. For instance, a microphone array consisting of multiple microphones on the terminal can be used to capture the first audio signal.

In some embodiments, the second audio signal is a single-channel audio signal captured based on a non-stereo format. That is, the terminal can capture the single-channel audio signal in the non-stereo format to obtain the second audio signal. The second audio signal is the signal of the target sound source. For example, the target sound source can be the user's voice. Alternatively, in different scenarios, the target sound source can also be any other sound, such as an animal's sound, a sound of a machine operating, etc., which are not limited in the present disclosure.

In some embodiments, the terminal can capture the single-channel audio signal using its own microphone, and can also perform processing using speech enhancement techniques such as beamforming, noise reduction, and blind source separation (BSS) to obtain the second audio signal with a high signal-to-noise ratio. It can be understood that the speech enhancement techniques can remove ambient sounds, noise, and reverberation from the original single-channel audio signal captured by the terminal, retaining only the components of the target sound source.

In some embodiments, the single-channel audio signal can be captured using an external microphone connected to the terminal, and can also be processed using speech enhancement techniques such as beamforming, noise reduction, and BSS to obtain the second audio signal with the high signal-to-noise ratio. The external microphone connected to the terminal includes, for example, a headset microphone, a handheld microphone, etc. The present disclosure does not list all examples, but is not limited thereto.

In the step S2102, the terminal 101 adjusts a partial audio signal corresponding to the target sound source in the first audio signal by using the second audio signal.

In some embodiments, a frequency difference between the partial audio signal corresponding to the target sound source in the first audio signal and the second audio signal is less than or equal to a threshold. That is, the partial audio signal whose frequency difference with the second audio signal is less than or equal to the threshold can be identified in the first audio signal, which can be determined as the partial audio signal corresponding to the target sound source. The terminal can use the second audio signal to adjust the partial audio signal corresponding to the target sound source in the first audio signal.

In some embodiments, the first audio signal is the multi-channel audio signal. When the target sound source is located in a first direction of the terminal, adjusting the partial audio signal corresponding to the target sound source in the first audio signal by using the second audio signal includes at least one of: attenuating, by using the second audio signal, the partial audio signal corresponding to the target sound source in the first audio signal of a channel corresponding to the first direction; or amplifying, by using the second audio signal, the partial audio signal corresponding to the target sound source in the first audio signal of a channel corresponding to another direction other than the first direction.

In some embodiments, the second audio signal can be used to attenuate the partial audio signal corresponding to the target sound source in the first audio signal of the channel corresponding to the first location. Attenuating the partial audio signal can involve attenuating an amplitude of the partial audio signal. For example, assuming that the terminal has left and right channels, and the first audio signals of the left and right channels are captured. When the user is on the left side of the terminal, the amplitude of the partial audio signal corresponding to the target sound source in the first audio signal of the left channel can be attenuated so that the amplitude of the partial audio signal corresponding to the target sound source in the first audio signal of the left channel is almost the same as the amplitude of the partial audio signal corresponding to the target sound source in the first audio signal of the right channel. For another example, when the user is on the right side of the terminal, the amplitude of the partial audio signal corresponding to the target sound source in the first audio signal of the right channel can be attenuated so that the amplitude of the partial audio signal corresponding to the target sound source in the first audio signal of the left channel is almost the same as the amplitude of the partial audio signal corresponding to the target sound source in the first audio signal of the right channel. For another example, assuming that the terminal has multiple channels, when the user is on the left front side of the terminal, the amplitude of the partial audio signal corresponding to the target sound source in the first audio signal of the left front channel can be attenuated so that the amplitudes of the partial audio signals corresponding to the target sound source in the first audio signals of the multiple channels are almost the same.

In some embodiments, the second audio signal can be used to amplify the partial audio signal corresponding to the target sound source in the first audio signal of another channel other than the channel corresponding to the first direction. Amplifying the partial audio signal can involve amplifying the amplitude of the partial audio signal. For example, assuming the terminal has left and right channels, and the first audio signals of the left and right channels are captured, when the user is on the left side of the terminal, the amplitude of the partial audio signal corresponding to the target sound source in the first audio signal of the right channel can be amplified so that the amplitude of the partial audio signal corresponding to the target sound source in the first audio signal of the left channel is almost the same as the amplitude of the partial audio signal corresponding to the target sound source in the first audio signal of the right channel. For another example, when the user is on the right side of the terminal, the amplitude of the partial audio signal corresponding to the target sound source in the first audio signal of the left channel can be amplified so that the amplitude of the partial audio signal corresponding to the target sound source in the first audio signal of the left channel is almost the same as the amplitude of the partial audio signal corresponding to the target sound source in the first audio signal of the right channel. For another example, assuming the terminal has multiple channels, when the user is on the left front side of the terminal, the amplitudes of the partial audio signals corresponding to the target sound source in the first audio signals of the right channel and the right front channel can be amplified, so that the amplitudes of the partial audio signals corresponding to the target sound source in the first audio signals of the multiple channels are almost the same. Alternatively, the present disclosure only provides a few specific examples and cannot list all examples, but it is not limited to these.

In some embodiments, the second audio data can be both used to attenuate the partial audio signal corresponding to the target sound source in the first audio signal of the channel corresponding to first direction, and to amplify the partial audio signal corresponding to the target sound source in the first audio signal of another channel other than the channel corresponding to first direction.

In some embodiments, attenuating the partial audio signal corresponding to the target sound source in the first audio signal of the channel corresponding to the first direction includes at least one of: subtracting the second audio signal that is in phase with the partial audio signal from the partial audio signal and obtaining the attenuated partial audio signal; or adding the second audio signal that is out of phase with the partial audio signal to the partial audio signal and obtaining the attenuated partial audio signal.

In some embodiments, the second audio signal that is in phase with the partial audio signal can be subtracted from the partial audio signal to obtain the attenuated partial audio signal. Due to being in-phase, the amplitude of the subtracted partial audio signal is smaller than that of the original partial audio signal. That is, the attenuated partial audio signal is obtained.

In some embodiments, the second audio signal that is out of phase with the partial audio signal can be added to the partial audio signal to obtain the added partial audio signal. Due to being out-of-phase, the added partial audio signal has a smaller amplitude compared to the original partial audio signal. That is, the attenuated partial audio signal is obtained.

In some embodiments, amplifying the partial audio signal corresponding to the target sound source in the first audio signal of the channel corresponding to another direction other than the first direction includes at least one of: adding the second audio signal that is in phase with the partial audio signal to the partial audio signal and obtaining the amplified partial audio signal; or subtracting the second audio signal that is out of phase with the partial audio signal from the partial audio signal and obtaining the amplified partial audio signal.

In some embodiments, the second audio signal that is in phase with the partial audio signal can be added to the partial audio signal to obtain the amplified partial audio signal. Due to being in-phase, the added partial audio signal has a larger amplitude than the original partial audio signal. That is, the amplified partial audio signal is obtained.

In some embodiments, the second audio signal that is out of phase with the partial audio signal can be subtracted from the partial audio signal to obtain the subtracted partial audio signal. Due to being out-of-phase, the subtracted partial audio signal has a larger amplitude compared to the original partial audio signal. That is, the amplified partial audio signal is obtained.

In the step S2103, the terminal 101 sends the second audio signal and the adjusted first audio signal to the terminal 102.

In some embodiments, the terminal 102 receives the second audio signal and the adjusted first audio signal sent by the terminal 101.

In some embodiments, the terminal 101 can be understood as a transmitting terminal, i.e., an end that sends the audio signal. The terminal 102 can be understood as a receiving terminal, i.e., an end that receives the audio signal. The terminal 101 can send the adjusted first audio signal and the second audio signal to the terminal 102 to achieve spatial audio-based communication in the earpiece mode, which enables to position the target sound source as close as possible to the desired location, such as positioning the user's voice in the center of the ambient sound, thereby improving the user experience.

In some embodiments, the terminal 101 may directly send the second audio signal and the adjusted first audio signal to the terminal 102, or it may mix the second audio signal and the adjusted first audio signal to obtain the mixed audio signal and send it to the terminal 102.

The method for processing the audio involved in embodiments of the present disclosure may include at least one of steps S2101 to S2103. For example, steps S2101 and S2102 may be implemented as an independent embodiment.

In some embodiments, step S2103 is optional, and one or more of these steps may be omitted or substituted in different embodiments.

In some embodiments, other implementations described before or after the specification corresponding to FIG. 2 may be referred to.

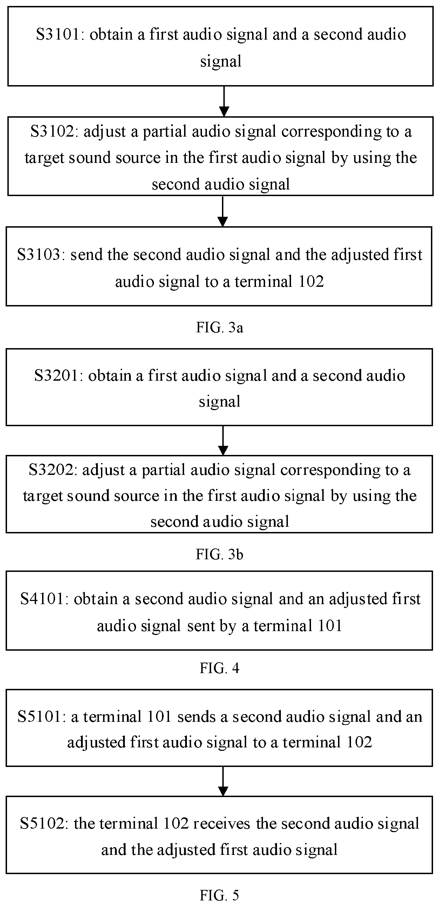

FIG. 3a shows a flowchart of a method for processing an audio according to an embodiment of the present disclosure. As shown in FIG. 3a, the embodiment of the present disclosure relates to the method for processing the audio, which is performed by the terminal 101, and the method includes steps S3101 to S3103.

In the step S3101, a first audio signal and a second audio signal are obtained.

For an implementation of the step S3101, reference can be made to the implementation of the step S2101 in FIG. 2 and other related portions of the embodiment involved in FIG. 2, which will not be repeated here.

In the step S3102, a partial audio signal corresponding to a target sound source in the first audio signal is adjusted by using the second audio signal.

For an implementation of the step S3102, reference can be made to the implementation of the step S2102 in FIG. 2 and other related portions of the embodiment involved in FIG. 2, which will not be repeated here.

In the step S3103, the second audio signal and the adjusted first audio signal are sent to the terminal 102.

For an implementation of the step S3103, reference can be made to the implementation of the step S2103 in FIG. 2 and other related portions of the embodiment involved in FIG. 2, which will not be repeated here.

In some embodiments, the terminal 101 sends the second audio signal and the adjusted first audio signal to the terminal 102, but is not limited thereto, and may also send the second audio signal and the adjusted first audio signal to other subjects.

FIG. 3b shows a flowchart of a method for processing an audio according to an embodiment of the present disclosure. As shown in FIG. 3b, the embodiment of the present disclosure relates to the method for processing the audio, which is performed by the terminal 101, and the method includes steps S3201 to S3202.

In the step S3201, a first audio signal and a second audio signal are obtained.

For an implementation of the step S3201, reference can be made to the implementation of the step S2101 in FIG. 2 and other related portions of the embodiment involved in FIG. 2, which will not be repeated here.

In the step S3202, a partial audio signal corresponding to a target sound source in the first audio signal is adjusted by using the second audio signal.

For an implementation of the step S3202, reference can be made to the implementation of the step S2102 in FIG. 2 and other related portions of the embodiment involved in FIG. 2, which will not be repeated here.

In some embodiments, a frequency difference between the partial audio signal corresponding to the target sound source in the first audio signal and the second audio signal is less than or equal to a threshold.

In some embodiments, the target sound source is located in a first direction of the terminal, and adjusting the partial audio signal corresponding to the target sound source in the first audio signal by using the second audio signal includes at least one of: attenuating, by using the second audio signal, the partial audio signal corresponding to the target sound source in the first audio signal of a channel corresponding to the first direction; or amplifying, by using the second audio signal, the partial audio signal corresponding to the target sound source in the first audio signal of a channel corresponding to another direction other than the first direction.

In some embodiments, attenuating the partial audio signal corresponding to the target sound source in the first audio signal of the channel corresponding to the first direction includes at least one of: subtracting the second audio signal that is in phase with the partial audio signal from the partial audio signal and obtaining the attenuated partial audio signal; or adding the second audio signal that is out of phase with the partial audio signal to the partial audio signal and obtaining the attenuated partial audio signal.

In some embodiments, amplifying the partial audio signal corresponding to the target sound source in the first audio signal of the channel corresponding to another direction other than the first direction includes at least one of: adding the second audio signal that is in phase with the partial audio signal to the partial audio signal and obtaining the amplified partial audio signal; or subtracting the second audio signal that is out of phase with the partial audio signal from the partial audio signal and obtaining the amplified partial audio signal.

FIG. 4 shows a flowchart of a method for processing an audio according to an embodiment of the present disclosure. As shown in FIG. 4, the embodiment of the present disclosure relates to the method for processing the audio, which is performed by the terminal 102, and the method includes:

in step S4101, a second audio signal and the adjusted first audio signal sent by the terminal 101 are obtained.

For an implementation of the step S4101, reference can be made to the implementation of the step S2103 in FIG. 2 and other related portions of the embodiment involved in FIG. 2, which will not be repeated here.

FIG. 5 shows a flowchart of a communication method according to an embodiment of the present disclosure. As shown in FIG. 5, the embodiment of the present disclosure relates to the communication method, which includes steps S5101 to S5102.

In the step S5101, the terminal 101 sends a second audio signal and the adjusted first audio signal to the terminal 102.

For an implementation of the step S5101, reference can be made to the implementation of the step S2103 in FIG. 2 and other related portions of the embodiment involved in FIG. 2, which will not be repeated here.

In some embodiments, the above methods may include the methods of the embodiments related to the communication system 100, the terminal 101, the terminal 102, etc., which will not be described again here.

In the step S5102, the terminal 102 receives the second audio signal and the adjusted first audio signal.

For an implementation of the step S5102, reference can be made to the implementation of the step S2103 in FIG. 2 and other related portions of the embodiment involved in FIG. 2, which will not be repeated here.

In some embodiments, the above methods may include the methods of the embodiments related to the communication system 100, the terminal 101, the terminal 102, etc., which will not be described again here.

Embodiments of the present disclosure further provide a method for processing an audio as follows.

In some embodiments, the UE at the transmitting end is set to the earpiece mode. The UE captures a first audio signal, which is a multi-channel spatial audio signal, and simultaneously captures a second audio signal, which is the audio signal of the target sound source. Since both the first audio signal and the second audio signal are captured at the same location, signals of respective channels in the first audio signal contain audio components of the target sound source, and the component of the target sound source in the first audio signal is highly correlated with the target sound source in the second audio signal. Therefore, the amplitude of the target sound source in each channel of the first audio signal can be controlled by performing addition between signals that are in phase with each other to amplify the amplitude, performing addition between signals that are out of phase with each other to attenuate the amplitude, or performing subtraction between signals that are in phase with each other to attenuate the amplitude.

In some embodiments, the UE at the transmitting end may be the terminal 101.

In some embodiments, the component of the target sound source in the first audio signal is the partial audio signal corresponding to the target sound source in the first audio signal, where high correlation can mean high frequency similarity. For example, a difference between the frequency of the partial audio signal corresponding to the target sound source in the first audio signal and the frequency of the second audio signal can be less than or equal to a threshold.

In some embodiments, the signal of the target sound source is sent to different channels of the spatial audio signal to amplify or attenuate the intensity of the component of the target sound source in each channel of the spatial audio, so that the intensity ratio relationship of the target signal across various channels meets the requirements, thereby controlling the target signal to be positioned at the desired location.

In some embodiments, in the earpiece mode, the UE is located on the left side of the user's head, capturing the audio in the stereo format and capturing the single-channel audio signal. The user's left and right directions align with the direction of the sound field. Since the user is located on the right side of the UE, the captured user's audio signal will be perceived as being on the right side. The single-channel audio signal is captured, which is, for example, the audio signal captured in the traditional monaural communication, and the single-channel audio signal is the main audio component of the target audio signal. Because the single-channel audio signal is highly correlated with some audio signal components in the stereo channels, the single-channel audio signal can be used to amplify the relevant audio components in the left channel of the stereo channels, or attenuate the relevant audio components in the right channel of the stereo channels, making the signal strengths of the main audio components in the left and right channels approximately the same, thereby positioning the main audio components in the center of the sound field.

In some embodiments, in the earpiece mode, the UE is located on the left side of the user's head, capturing the audio in the stereo format and capturing the single-channel audio signal using an external mic, such as a headset or handheld microphone. The processing method is consistent with the above embodiment 1.

In some embodiments, the user is located on the left-front side of the UE, requiring the user's voice to be positioned in the front-upper direction. The spatial audio is captured in format 5.1.4, while multiple microphones on the UE are used to form a microphone array to capture the single-channel audio signal using the speech enhancement techniques such as beamforming, BSS, etc. Since the user is located on the left-front side of the UE, the captured user audio signal will be perceived as being on the left-front side. The captured single-channel audio signal is used to amplify the user audio signal in the right channel and the right-front-upper channel, positioning the user audio signal in the front-upper direction.

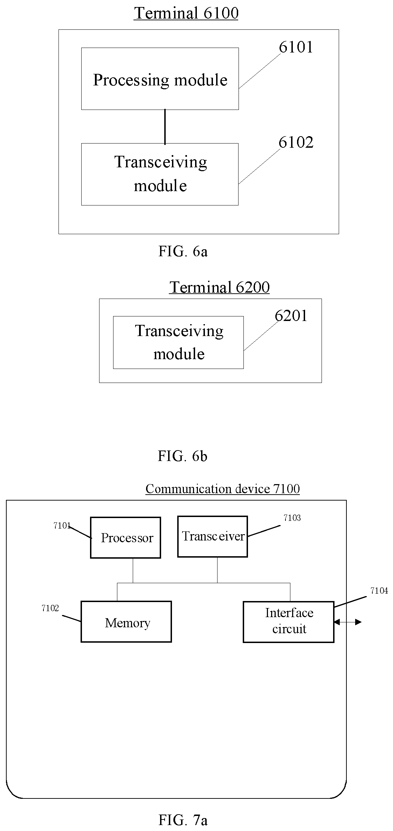

FIG. 6a is a schematic structural diagram of a terminal provided in an embodiment of the present disclosure. As shown in FIG. 6a, the terminal 6100 may include a processing module 6101. In some embodiments, the processing module 6101 is configured to obtain a first audio signal and a second audio signal in response to a terminal being in an earpiece mode, the first audio signal is a multi-channel audio signal captured based on a stereo format, the first audio signal includes audio signals of a plurality of sound sources, and the plurality of sound sources include a target sound source, the second audio signal is a single-channel audio signal captured based on a non-stereo format, and the second audio signal is an audio signal of the target sound source; and adjust a partial audio signal corresponding to the target sound source in the first audio signal by using the second audio signal.

In some embodiments, a frequency difference between the partial audio signal corresponding to the target sound source in the first audio signal and the second audio signal is less than or equal to a threshold.

In some embodiments, the target sound source is located in a first direction of the terminal, and the processing module adjusts, by using the second audio signal, the partial audio signal corresponding to the target sound source in the first audio signal in at least one of the following manners: attenuating, by using the second audio signal, the partial audio signal corresponding to the target sound source in the first audio signal of a channel corresponding to the first direction; or amplifying, by using the second audio signal, the partial audio signal corresponding to the target sound source in the first audio signal of a channel corresponding to another direction other than the first direction.

In some embodiments, the processing module attenuates the partial audio signal corresponding to the target sound source in the first audio signal of the channel corresponding to the first direction in at least one of the following manners: subtracting the second audio signal that is in phase with the partial audio signal from the partial audio signal and obtaining the attenuated partial audio signal; or adding the second audio signal that is out of phase with the partial audio signal to the partial audio signal and obtaining the attenuated partial audio signal.

In some embodiments, the processing module amplifies the partial audio signal corresponding to the target sound source in the first audio signal of the channel corresponding to another direction other than the first direction in at least one of the following manners: adding the second audio signal that is in phase with the partial audio signal to the partial audio signal and obtaining the amplified partial audio signal; or subtracting the second audio signal that is out of phase with the partial audio signal from the partial audio signal and obtaining the amplified partial audio signal.

In some embodiments, the terminal 6100 can further include a transceiving module 6102, which may be, for example, configured to send the second audio signal and the adjusted first audio signal to the terminal 102.

FIG. 6b is a schematic structural diagram of a terminal provided in an embodiment of the present disclosure. As shown in FIG. 6b, the terminal 6200 can include a transceiving module 6201. The transceiving module 6201 is configured to receive a second audio signal and an adjusted first audio signal sent by the terminal 101.

FIG. 7a is a schematic structural diagram of a communication device 7100 provided in an embodiment of the present disclosure. The communication device 7100 may be the terminal 101, the terminal 102, or a chip, a chip system, or a processor that supports the terminal in implementing any of the above methods. In some embodiments, the terminal can be a user equipment, etc. The communication device 7100 may be configured to implement the method described in the above method embodiments. For details, please refer to the description of the above method embodiments.

As shown in FIG. 7a, the communication device 7100 includes one or more processors 7101. The processor 7101 may be a general-purpose processor or a dedicated processor, such as a baseband processor or a central processing unit (CPU). The baseband processor may be configured to process communication protocols and communication data. The CPU may be configured to control a communication device, execute programs, and process program data. The communication device 7100 is configured to perform any of the above methods. In some embodiments, the communication device can be a base station, a baseband chip, a terminal device, a terminal device chip, a DU or a CU, etc.

In some embodiments, the communication device 7100 further includes one or more memories 7102 for storing instructions. In some embodiments, all or a part of the memory 7102 may be located external to the communication device 7100.

In some embodiments, the communication device 7100 further includes one or more transceivers 7103. When the communication device 7100 includes one or more transceivers 7103, the transceiver 7103 performs the communication step S2101 such as sending and/or receiving in the above methods, and the processor 7101 performs other steps.

In some embodiments, the transceiver may include a receiver and/or a sender, which may be separated or integrated. Alternatively, terms such as the transceiver, the transceiver unit, the transceiver machine, and the transceiver circuit are interchangeable; terms such as the sender, the sending unit, the sender machine, and the sending circuit are interchangeable; and terms such as the receiver, the receiving unit, the receiver machine, and the receiving circuit are interchangeable.

In some embodiments, the communication device 7100 may further include one or more interface circuits 7104. In some embodiments, the interface circuit 7104 is connected to the memory 7102 and may be configured to receive signals from the memory 7102 or other devices, and may be configured to send signals to the memory 7102 or other devices. For example, the interface circuit 7104 may read instructions stored in the memory 7102 and send the instructions to the processor 7101.

The communication device 7100 described in the above embodiments may be a network device or a terminal, but the scope of the communication device 7100 described in the present disclosure is not limited thereto, and the structure of the communication device 7100 may not be limited to FIG. 7a. The communication device may be an independent device or a part of a larger device. For example, the communication device may be: (1) an independent integrated circuit (IC), or a chip, or a chip system or subsystem; (2) a collection of one or more ICs, in some embodiments, the above IC collection may further include a storage component for storing data and programs; (3) an ASIC, such as a modem; (4) a module that can be embedded in other devices; (5) a receiver, a terminal device, an intelligent terminal device, a cellular phone, a wireless device, a handheld device, a mobile unit, an in-vehicle device, a network device, a cloud device, an artificial intelligence device, etc.; (6) others, etc.

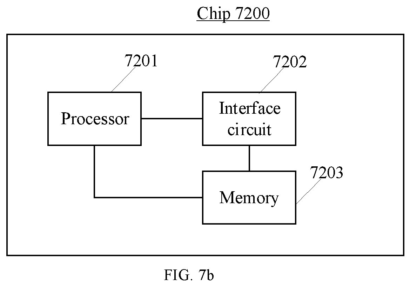

FIG. 7b is a schematic diagram of a structure of a chip 7200 provided in an embodiment of the present disclosure. For the case where the communication device 7100 may be a chip or a chip system, the schematic diagram of the structure of the chip 7200 shown in FIG. 7b may be referred to, but is not limited to thereto.

The chip 7200 includes one or more processors 7201, and the chip 7200 is configured to perform any of the above methods.

In some embodiments, the chip 7200 further includes one or more interface circuits 7202 connected to the memory 7203. In some embodiments, the interface circuit 7202 may be configured to receive signals from the memory 7203 or other devices, or may be configured to send signals to the memory 7203 or other devices. For example, the interface circuit 7202 may read an instruction stored in the memory 7203 and send the instruction to the processor 7201.

In some embodiments, the interface circuit 7202 performs the communication step S2101 such as sending and/or receiving in the above methods, and the processor 7201 performs other steps.

In some embodiments, the terms such as the interface circuit, the interface, the transceiver pin, and the transceiver, etc. are interchangeable.

In some embodiments, the chip 7200 further includes one or more memories 7203 for storing instructions. In some embodiments, all or a part of the memory 7203 may be located external to the chip 7200.

The present disclosure also provides a storage medium. The storage medium described above stores an instruction. The instruction, when run on the communication device 7100, causes the communication device 7100 to perform any of the above methods. In some embodiments, the storage medium described above is an electronic storage medium. In some embodiments, the storage medium described above is a computer-readable storage medium, but is not limited thereto. The storage medium may also be a storage medium readable by other devices. In some embodiments, the storage medium described above may be a non-transitory storage medium, but is not limited thereto. The storage medium described above may also be a transient storage medium.

The present disclosure also provides a program product that, when executed by the communication device 7100, causes the communication device 7100 to perform any of the above methods. In some embodiments, the program product is a computer program product.

The present disclosure also provides a computer program that, when executed on a computer, causes the computer to perform any of the above methods.

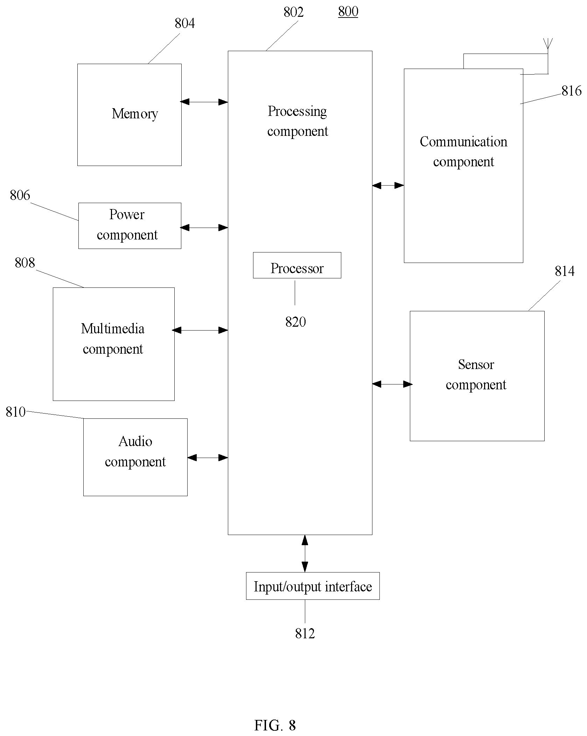

FIG. 8 shows a block diagram of an apparatus 800 for processing an audio according to an example embodiment.

As shown in FIG. 8, the apparatus 800 may include one or more of the following components: a processing component 802, a memory 804, a power component 806, a multimedia component 808, an audio component 810, an input/output (I/O) interface 812, a sensor component 814, and a communication component 816.

The processing component 802 generally controls the overall operation of the apparatus 800, such as operations associated with display, phone calls, data communications, camera operations, and recording operations. The processing component 802 may include one or more processors 820 to execute instructions to complete all or some of the steps of the above-mentioned method(s). In addition, the processing component 802 may include one or more modules to facilitate the interaction between the processing component 802 and other components. For example, the processing component 802 may include a multimedia module to facilitate the interaction between the multimedia component 808 and the processing component 802.

The memory 804 is configured to store various types of data to support the operation of the apparatus 800. Examples of such data include instructions for any application or method operating on the apparatus 800, contact data, phone book data, messages, pictures, videos, etc. The memory 804 may be implemented by any type of volatile or nonvolatile memory device or a combination thereof, such as Static Random Access Memory (SRAM), Electrically Erasable Programmable Read-Only Memory (EEPROM), Erasable Programmable Read-Only Memory (EPROM), Programmable Read-Only Memory (PROM), Read-Only Memory (ROM), magnetic memory, flash memory, magnetic disk, or optical disk.

The power component 806 provides power to various components of the apparatus 800. The power component 806 may include a power management system, one or more power supplies, and other components associated with generating, managing, and distributing power for the apparatus 800.

The multimedia component 808 includes a screen that provides an output interface between the apparatus 800 and the user. In some implementations, the screen may include a Liquid Crystal Display (LCD) and a Touch Panel (TP). If the screen includes a touch panel, the screen may be implemented as a touch screen to receive input signals from the user. The touch panel includes one or more touch sensors to sense touch, slide, and gestures on the touch panel. The touch sensor may not only sense the boundaries of the touch or slide action, but also detect the duration and pressure associated with the touch or slide operation. In some implementations, the multimedia component 808 includes a front camera and/or a rear camera. When the apparatus 800 is in an operating mode, such as a shooting mode or a video mode, the front camera and/or the rear camera may receive external multimedia data. Each of the front camera and the rear camera may be a fixed optical lens system or have a focal length and optical zooming capability.

The audio component 810 is configured to output and/or input audio signals. For example, the audio component 810 includes a microphone (MIC). The microphone (MIC) is configured to receive external audio signals when the apparatus 800 is in an operating mode, such as a call mode, a recording mode, and a voice recognition mode. The received audio signal may be further stored in the memory 804 or sent via the communication component 816. In some implementations, the audio component 810 also includes a speaker for outputting audio signals.

The I/O interface 812 provides an interface between the processing component 802 and the peripheral interface module, which may be a keyboard, a click wheel, a button, etc. These buttons may include, but are not limited to: a home button, a volume button, a start button, and a lock button.

The sensor component 814 includes one or more sensors for providing various aspects of status evaluation for the apparatus 800. For example, the sensor component 814 may detect the on/off state of the apparatus 800, the relative positioning of the components, such as the display and the keypad of the apparatus 800. The sensor component 814 may also detect the position change of the apparatus 800 or a component of the apparatus 800, the presence or absence of contact between the user and the apparatus 800, the orientation or acceleration/deceleration of the apparatus 800, and the temperature change of the apparatus 800. The sensor component 814 may include a proximity sensor, which is configured to detect the presence of a nearby object without any physical contact. The sensor component 814 may also include a light sensor, such as a CMOS or CCD image sensor, for use in imaging applications. In some implementations, the sensor component 814 may also include an accelerometer, a gyroscope, a magnetic sensor, a pressure sensor, or a temperature sensor.

The communication component 816 is configured to facilitate wired or wireless communication between the apparatus 800 and other devices. The apparatus 800 may access a wireless network based on a communication standard, such as WiFi, 2G or 3G, or a combination thereof. In an example embodiment, the communication component 816 receives a broadcast signal or broadcast-related information from an external broadcast management system via a broadcast channel. In an example embodiment, the communication component 816 also includes a Near Field Communication (NFC) module to facilitate short-range communication. For example, the NFC module may be implemented based on Radio Frequency Identification (RFID) technology, Infrared Data Association (IrDA) technology, Wltra-WideBand (UWB) technology, Bluetooth (BT) technology, and other technologies.

In an example embodiment, the apparatus 800 may be implemented by one or more Application-Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, microcontrollers, microprocessors, or other electronic components to perform the above method(s).

In an example embodiment, a non-transitory computer-readable storage medium including instructions is also provided, such as a memory 804 including instructions. The above instructions may be executed by a processor 820 of the apparatus 800 to complete the above method(s). For example, the non-transitory computer-readable storage medium may be a ROM, a Random Access Memory (RAM), a CD-ROM, a tape, a floppy disk, and an optical data storage device, etc.

## Claims

1. A method for processing an audio, comprising:
obtaining a first audio signal and a second audio signal in response to a terminal being in an earpiece mode;
wherein the first audio signal is a multi-channel audio signal captured based on a stereo format, the first audio signal comprises audio signals of a plurality of sound sources, and the plurality of sound sources comprise a target sound source, the second audio signal is a single-channel audio signal captured based on a non-stereo format, and the second audio signal is an audio signal of the target sound source; and
adjusting a partial audio signal corresponding to the target sound source in the first audio signal by using the second audio signal.

2. The method according to claim 1, wherein a frequency difference between the partial audio signal corresponding to the target sound source in the first audio signal and the second audio signal is less than or equal to a threshold.

3. The method according to claim 1, wherein the target sound source is located in a first direction of the terminal, and adjusting the partial audio signal corresponding to the target sound source in the first audio signal by using the second audio signal comprises at least one of:
attenuating, by using the second audio signal, the partial audio signal corresponding to the target sound source in the first audio signal of a channel corresponding to the first direction; or
amplifying, by using the second audio signal, the partial audio signal corresponding to the target sound source in the first audio signal of a channel corresponding to another direction other than the first direction.

4. The method according to claim 3, wherein attenuating the partial audio signal corresponding to the target sound source in the first audio signal of the channel corresponding to the first direction comprises at least one of:
subtracting the second audio signal that is in phase with the partial audio signal from the partial audio signal and obtaining the attenuated partial audio signal; or
adding the second audio signal that is out of phase with the partial audio signal to the partial audio signal and obtaining the attenuated partial audio signal.

5. The method according to claim 3, wherein amplifying the partial audio signal corresponding to the target sound source in the first audio signal of the channel corresponding to another direction other than the first direction comprises at least one of:
adding the second audio signal that is in phase with the partial audio signal to the partial audio signal and obtaining the amplified partial audio signal; or
subtracting the second audio signal that is out of phase with the partial audio signal from the partial audio signal and obtaining the amplified partial audio signal.

6. An apparatus for processing an audio, comprising:
an obtaining module, configured to obtain a first audio signal and a second audio signal in response to a terminal being in an earpiece mode;
wherein the first audio signal is a multi-channel audio signal captured based on a stereo format, the first audio signal comprises audio signals of a plurality of sound sources, and the plurality of sound sources comprise a target sound source, the second audio signal is a single-channel audio signal captured based on a non-stereo format, and the second audio signal is an audio signal of the target sound source; and
a processing module, configured to adjust a partial audio signal corresponding to the target sound source in the first audio signal by using the second audio signal.

7. The apparatus according to claim 6, wherein a frequency difference between the partial audio signal corresponding to the target sound source in the first audio signal and the second audio signal is less than or equal to a threshold.

8. The apparatus according to claim 6, wherein the target sound source is located in a first direction of the terminal, and the processing module adjusts, by using the second audio signal, the partial audio signal corresponding to the target sound source in the first audio signal in at least one of the following manners:
attenuating, by using the second audio signal, the partial audio signal corresponding to the target sound source in the first audio signal of a channel corresponding to the first direction; or
amplifying, by using the second audio signal, the partial audio signal corresponding to the target sound source in the first audio signal of a channel corresponding to another direction other than the first direction.

9. The apparatus according to claim 8, wherein the processing module attenuates the partial audio signal corresponding to the target sound source in the first audio signal of the channel corresponding to the first direction in at least one of the following manners:
subtracting the second audio signal that is in phase with the partial audio signal from the partial audio signal and obtaining the attenuated partial audio signal; or
adding the second audio signal that is out of phase with the partial audio signal to the partial audio signal and obtaining the attenuated partial audio signal.

10. The apparatus according to claim 8, wherein the processing module amplifies the partial audio signal corresponding to the target sound source in the first audio signal of the channel corresponding to another direction other than the first direction in at least one of the following manners:
adding the second audio signal that is in phase with the partial audio signal to the partial audio signal and obtaining the amplified partial audio signal; or
subtracting the second audio signal that is out of phase with the partial audio signal from the partial audio signal and obtaining the amplified partial audio signal.

11. An electronic device, comprising: a memory for storing instructions; and
a processor, configured to invoke the instructions stored in the memory to execute the method according to any one of claims 1-5.

12. A storage medium, wherein the storage medium stores instructions, which, when executed by a processor, perform the method according to any one of claims 1-5.
